# EUROPÄISCHE PATENTSCHRIFT

(11) **EP 3 160 012 B1**
(45) Veröffentlichungstag und Bekanntmachung des Hinweises auf die Patenterteilung: **19.06.2024**
(21) Anmeldenummer: 15190522.1
(22) Anmeldetag: 20.10.2015
(51) Int. Cl.: H02K 1/17, H02K 1/18, H02K 5/10, H02K 41/03

(54) **SEKUNDÄRTEIL EINES LINEARMOTORS**
SECONDARY PART OF A LINEAR MOTOR
ÉLEMENT SECONDAIRE D'UN ENTRAINEMENT LINEAIRE

(43) Veröffentlichungstag der Anmeldung: 26.04.2017
(73) Patentinhaber: ETEL S.A., 2112 Môtiers (CH)
(72) Erfinder: GAUSE, Alfred, 73666 Baltmannsweiler (DE); FERNANDES GONCALVES,, José Manuel, 2013 Colombier (CH)
(74) Vertreter: Pleyer, Hans Anno

(56) Entgegenhaltungen:
- EP-A2- 1 672 772
- EP-A2- 2 555 396
- DE-A1- 19 547 686
- DE-A1-102007 035 900
- KR-A- 20110 080 879

## Beschreibung

### GEBIET DER TECHNIK

Die vorliegende Erfindung betrifft einen Sekundärteil eines Linearmotors. Solche Sekundärteile bilden den passiven Teil eines Linearmotors, der durch mit abwechselnder Polarität auf einem Magnetträger angeordnete Permanentmagnete eine Magnetbahn bildet, entlang der sich ein Primärteil bewegt. Die Spulen des Primärteils werden aktiv mit Strom versorgt, so dass Magnetfelder entstehen und letztlich Kräfte zwischen dem Primärteil und dem Sekundärteil wirken, die zu einer kontrollierten Relativbewegung zwischen Primär- und Sekundärteil führen.

### STAND DER TECHNIK

Die Magnete eines Sekundärteils bestehen häufig aus relativ brüchigen Materialien. Deswegen, und wegen ihrer starken Magnetkräfte, die magnetisierbare Stoffe wie beispielsweise Eisenspäne stark anziehen, werden die Magnete häufig gegen die Umgebung abgeschirmt.

Aus der EP 1230727 B1 ist es bekannt, die Magnete eines Sekundärteils mittels seitlich der Magnetbahn angeordneter Abdeckleisten aus einem Kunststoff zu schützen. Dieser Kunststoff ist flexibel und kann auch an gekrümmte Magnetbahnen angepasst werden. Die Magnete werden zusätzlich durch ein Abdeckband geschützt, das auf die Magnete aufgelegt wird und das seitlich auch auf den Abdeckleisten aufliegt, so dass die Magnete von allen Seiten her gegen die Umgebung abgeschirmt sind. Die Positionierung der Magnete auf dem Magnetträger ist bei diesen Sekundärteilen allerdings ein aufwändiger Prozess.

In der KR 20110080879 A ist offenbart, die Magnete in einen gitterartigen Rahmen aus Kunststoff einzusetzen, der zuvor auf den Magnetträger geklebt wurde. Der Rahmen hilft dabei, die Magnete richtig zu positionieren, und schützt die Magnete. Auf dem Rahmen und den Magneten wird wiederum eine Abdeckung angebracht, so dass die Magnete vollständig von der Umgebung abgekapselt sind. Die Abdeckung der Magnete erfolgt auch hier durch eine mehrteilige Abdeckung, was den Montageaufwand erhöht.

Aus der DE 102007020057 A1 sind Linearmotoren bekannt, bei denen das Primärteil und das Sekundärteil Blechpakete umfassen, deren einzelne Bleche nach dem Zusammensetzen Kühlkanäle ausbilden. Zusätzliche Kühlschlangen oder Bearbeitungsschritte zum Einbringen der Kühlkanäle werden so eingespart. Die Bleche sind dabei wie üblich so ausgerichtet, dass deren Ebene parallel zur Richtung des Magnetfeldes im Luftspalt des Motors liegt, um Wirbelströme möglichst gut zu unterdrücken.

Aus der EP 2555396 A2 ist ein Sekundärteil eines Linearmotors bekannt, dessen Sekundärteil ein Joch aus einem festen Materialblock oder aus einem Blechpaket aufweisen kann.

Die EP 1672772 A2 offenbart Abdeckungen zur Fixierung von Permanentmagneten eines Sekundärteils eines Linearmotors.

Die DE 102007035900 A1 offenbart einen Linearmotor mit einem Primärteil, das aus gezahnten Einzelblechen aufgebaut ist, wobei die Einzelbleche parallel zur Magnetisierungsrichtung der Magnete des Sekundärteils ausgerichtet sind.

Die DE 19547686 A1 offenbart einen Linearmotor, dessen Magnetträger als massives Bauteil ausgeführt ist.

### ZUSAMMENFASSUNG DER ERFINDUNG

Es ist Aufgabe der Erfindung, die bekannten Sekundärteile weiter zu verbessern, so dass deren Montage erleichtert wird.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird ein Sekundärteil eines Linearmotors offenbart, das auf einem Magnetträger angeordnete Magnete aufweist. Der Magnetträger ist als laminiertes Blechpaket ausgeführt, dessen Bleche in einer Ebene liegen, die senkrecht zur Magnetisierungsrichtung der Magnete liegt.

Es wurde nämlich erkannt, dass eine optimale Unterdrückung von Wirbelströmen durch die im Stand der Technik übliche Ausrichtung der Bleche des Blechpakets parallel zur Magnetisierungsrichtung der Magnete gar nicht unbedingt notwendig ist. Durch die Ausrichtung der Bleche parallel zu einer Ebene, die senkrecht zur Magnetisierungsrichtung der Magnete M liegt, werden jedoch erhebliche Vorteile bei der Herstellung des Sekundärteils erzielt. Die Bleche liegen also parallel zu der Ebene, in der die Magnete angeordnet sind, und damit auch parallel zur Ebene des Luftspalts des Linearmotors.

Durch diese Anordnung der Bleche im Blechpaket des Sekundärteils ist es möglich, die einzelnen Bleche bei deren Herstellung so mit Öffnungen zu versehen, dass beim Übereinanderlegen und Verbinden der Bleche zu einem Blechpaket Montageöffnungen entstehen, die das Blechpaket senkrecht durchstoßen, und die zum Befestigen des Magnetträgers an einem Maschinenteil dienen. Solche Montageöffnungen mussten bisher mit zusätzlichen Arbeitsschritten nachträglich in den Magnetträger eingebracht werden. Diese Arbeitsschritte entfallen, wenn entsprechende Löcher schon beim Ausstanzen oder Ausschneiden der einzelnen Bleche hergestellt werden. Dies ist allerding nur möglich, wenn die Bleche senkrecht zur Magnetisierungsrichtung der Magnete und damit parallel zur vom Sekundärteil aufgespannten Ebene liegen, denn herkömmlich angeordnete Bleche würden durch solche Öffnungen in mehrere Einzelteile zerfallen.

Die erfindungsgemäße Anordnung der Bleche senkrecht zur Magnetisierungsrichtung ermöglicht daher die einfache Herstellung eines sehr kompakten, aus nur wenigen Lagen Blech aufgebauten Magnetträgers. Für einen üblichen Linearmotor genügen beispielsweise fünf bis zehn Lagen Blech der Stärke 0.65 mm, um einen Magnetträger zu formen.

Solche Blechpakete sind mit sehr guten Eigenschaften (hohe magnetische Leitfähigkeit, etwa von SiFe oder CoFe) erhältlich. Dank der gegeneinander isolierten Bleche werden Wirbelströme im Magnetträger unterdrückt. Außerdem lassen sich solche Blechpakete mit unterschiedlichsten Formen und Öffnungen besonders einfach und kostengünstig herstellen, indem man die Pakete aus unterschiedlich geformten (z.B. durch Stanzen oder Laserschneiden) Blechen aufbaut und miteinander verbindet (auch paketieren genannt). Die aufwändige spanende Bearbeitung, die bei aus dem Vollen gefrästen Magnetträgern sonst nötig wäre, entfällt ebenso wie die teure Beschichtung solcher herkömmlichen Magnetträger, die zu deren Schutz gegen Korrosion notwendig ist.

Um ein kompaktes, stabiles und gut geschütztes Sekundärteil zu erhalten, sind weitere Maßnahmen vorgesehen. So weist das Sekundärteil eine Abdeckung für die Magnete auf, die zusammen mit dem Magnetträger die Magnete einschließt und vor Umwelteinflüssen schützt. Dieses Sekundärteil zeichnet sich dadurch aus, dass die Abdeckung auf ihrer Innenseite erste Stege aufweist, die zwischen die Magnete ragen. Die gemäß dieser Lösung verwendete Abdeckung kann in einem Stück hergestellt werden, und integriert dabei sowohl die Schutzfunktion für die Magnete, als auch die Montagehilfe zur Positionierung der Magnete, die im Stand der Technik als separate Vorrichtung zur Verfügung gestellt werden muss.

Die Abdeckung weist außerdem zweite Stege auf, an die ein erster, vom Magnetträger abstehender Schenkel eines in Längsrichtung des Sekundärteils erstreckten, nichtmagnetischen Winkels (L - förmiges Profil) angelegt ist, dessen zweiter Schenkel am Magnetträger befestigt ist.

Dieser vorzugsweise aus Edelstahl ausgeführter Winkel erfüllt dabei zwei Funktionen. Dank seiner Ausgestaltung als Winkel verleiht er dem Sekundärteil eine erhebliche zusätzliche Stabilität, die es erlaubt, den Magnetträger um einiges dünner auszuführen als sonst üblich. Magnetträger werden oft aus stabilitätsgründen deutlich dicker und damit schwerer ausgeführt, als es zum Leiten der magnetischen Felder der Magnete eigentlich notwendig wäre. Dank der Winkel kann die Magnetträger nun dünner und leichter ausgeführt werden. Außerdem dient der vom Magnetträger abstehende Schenkel der Positionierung der Magnete, da diese von den abstehenden Schenkeln seitlich positioniert und gehalten werden.

Die Abdeckung ist als Spritzgussteil ausgebildet, in dessen innerem, den Magneten und dem Magnetträger zugewandten Bereich die ersten und zweiten Stege dafür sorgen, dass sowohl die Magnete als auch die Winkel schon vor der eigentlichen Montage auf dem Magnetträger besonders einfach und genau positioniert werden können. Nach dem Einlegen der Magnete und Winkel in die Abdeckung ist deren relative Positionierung bereits abgeschlossen, die Abdeckung muss dann nur noch auf dem Magnetträger positioniert und befestigt werden. Zentrieröffnungen und Stifte oder sonstige, einander entsprechende Formen an der Abdeckung und am Magnetträger erleichtern diesen Schritt.

Dank der Ausführung als Spritzgussteil kann die Außenseite der Abdeckung auch sehr einfach mit Warnhinweisen bezüglich starker Magnetfelder oder mit einem Logo des Herstellers versehen werden. Einmal in der Spritzgussform angelegt bedeuten solche Hinweise bei der Fertigung keinen Mehraufwand. Auch durch die Farbe des verwendeten Kunststoffes können dem Anwender Hinweise gegeben werden, etwa indem die Stärke der Magneten farblich codiert mitgeteilt wird.

Die Abdeckung liefert in einem einzigen, einfach zu fertigenden Bauteil sowohl eine Montagehilfe als auch einen Schutz der Magnete vor mechanischer Beschädigung und Korrosion. Das Zusammenfügen mehrerer Bestandteile zu einer geschlossenen Abdeckung wie im Stand der Technik ist hier nicht notwendig.

Die Winkel können in langen Stücken vorgefertigt sein, und in der jeweils benötigten Länge abgeschnitten werden. Dies vereinfacht die Lagerhaltung. Außerdem kann der am Magnetträger anliegende zweite Schenkel in gewissen Abständen V-förmige Einschnitte aufweisen, so dass auch in der Ebene der Magnete gekrümmte Magnetbahnen möglich sind. Die Winkel lassen sich dank der Einschnitte auf die jeweils benötigte Krümmung biegen.

Ein Ausführungsbeispiel der Erfindung wird anhand der folgenden Figuren näher beschrieben.

### KURZE BESCHREIBUNG DER ZEICHNUNGEN

Dabei zeigt
- Figur 1: eine Ansicht des Sekundärteils von außen,
- Figur 2: eine Explosionszeichnung des Sekundärteils, dargestellt von schräg oben,
- Figur 3: eine Explosionszeichnung des Sekundärteils, dargestellt von schräg unten.

### BESCHREIBUNG DER AUSFÜHRUNGSFORMEN

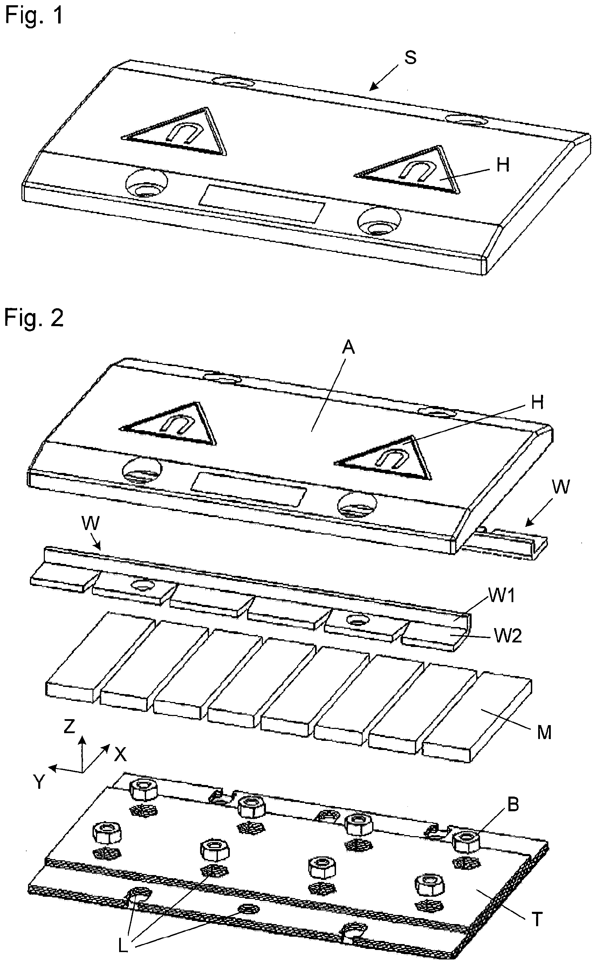

Die Figur 1 zeigt ein Sekundärteil gemäß der Erfindung im fertig montierten Zustand. In dieser Ansicht ist nur die Abdeckung A zu erkennen, unter der sich alle weiteren Komponenten des Sekundärteils S verbergen. Die Abdeckung A umgibt das Sekundärteil S seitlich und oberhalb der Permanentmagnete M vollständig. Auf der Abdeckung A sind Warnhinweise H zu erkennen, die schon bei der Herstellung der Abdeckung A durch eine entsprechende Spritzgussform eingebracht wurden.

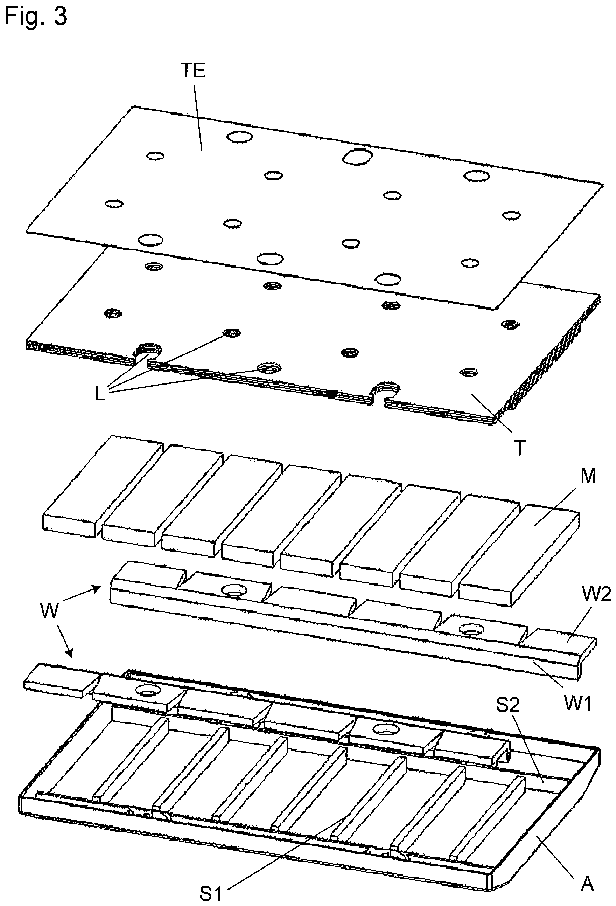

Die Figuren 2 und 3 sind Explosionsdarstellungen des Sekundärteils S, aus zwei unterschiedlichen Richtungen betrachtet.

Man erkennt den Magnetträger T, auf dem Magnete M mit abwechselnder Polarität angeordnet sind. Der Magnetträger T ist als laminiertes Blechpaket ausgeführt, dessen äußere Form durch die Form seiner einzelnen Bleche bestimmt wird. Montageöffnungen L, durch die Schrauben oder Zentrierstifte gesteckt werden können, oder die zur Aufnahme von Befestigungsmitteln B wie z.B. Schraubenmuttern dienen, müssen so nicht aufwändig gefräst werden. Auch das Schneiden von Gewinden kann entfallen, wie das Beispiel mit den Muttern B zeigt.

Das Einbringen der den Magnetträger T in Z-Richtung durchstoßenden Montageöffnungen L schon beim Herstellen der einzelnen Bleche des Magnetträgers T ist nur möglich, weil die einzelnen Bleche parallel zu einer Ebene X-Y liegen, die senkrecht zur Magnetisierungsrichtung Z der Magnete M liegt. Anders ausgedrückt liegen die Bleche parallel zu einer Ebene, die von der Länge des Sekundärteils in Y-Richtung und von der Breite des Sekundärteils S in X-Richtung aufgespannt wird. Die Bleche liegen damit auch parallel zum Luftspalt des Linearmotors. So ist es möglich, Montageöffnungen L durch das Ausstanzen oder Schneiden von Löchern in die einzelnen Bleche zu bilden.

Auch Montageöffnungen L, die zum Einlegen der Schraubenmuttern B unterschiedliche Radien oder sogar eckige Formen benötigen (eine größere, eckig geformte Öffnung zur verdrehsicheren Aufnahme der Schraubenmutter B auf der Magnetseite, einen kleineren Radius zur Aufnahme einer Schraube auf der Rückseite des Magnetträgers T) sind durch passend gestanzte Bleche sehr einfach herzustellen.

Man erkennt in der Figur 2 außerdem zwei Winkel W, die beidseits der Magnete M angeordnet sind, und deren erster Schenkel W1 vom Magnetträger T absteht, während der zweite Schenkel W2 am Magnetträger T befestigt ist. Die abstehenden ersten Schenkel W1 berühren die Magnete M seitlich und fixieren diese während des Montageprozesses quer zur Magnetbahn. Die Befestigung der zweiten Schenkel am Magnetträger T kann mittels Schrauben erfolgen, oder auch durch Klammern oder formschlüssige Steckverbindungen.

Weitere Details sind der Figur 3 zu entnehmen, die einen Blick in den inneren, den Magneten M zugewandten Bereich der Abdeckung A ermöglicht.

In der Abdeckung A sind erste Stege S1 zu erkennen, die zwischen die Magnete M ragen, so dass die Magnete M auch in der Richtung der Magnetbahn (also in der Bewegungsrichtung des Linearmotors) fixiert werden, um die Montage des Sekundärteils S zu erleichtern.

Senkrecht zu den ersten Stegen S1 verlaufende zweite Stege S2 in der Abdeckung A bilden eine Anlagefläche für je einen ersten Schenkel W1 eines Winkels W, so dass letztlich die innere Fläche jedes ersten Schenkels W1 einen Magnet M berührt, während die nach außen orientierte Fläche jedes ersten Schenkels W1 einen zweiten Steg S2 berührt. Die beiden zweiten Stege S2 klemmen also gewissermaßen je zwei Winkel W und die Magnete M zwischen sich ein.

Zwischen den Enden der ersten Stege S1 und den zweiten Stegen S2 besteht ein Abstand oder Spalt, der die abstehenden ersten Schenkel W1 der Winkel W aufnimmt.

Die Abdeckung A umschließt seitlich den Magnetträger T, so dass die im Inneren der Abdeckung A angeordneten Magnete M durch die Abdeckung A und den Magnetträger M vollständig vor schädlichen Einflüssen der Umgebung geschützt sind. Auch das Blechpaket des Magnetträgers T wird auf diese Weise von der Abdeckung A geschützt, da die seitlich des Magnetträgers T hervortretenden Blechkanten von den seitlichen Begrenzungen der Abdeckung A bedeckt sind.

Eine schützende untere Abdeckung TE liegt auf der Rückseite des Magnetträgers T auf. Außer als weiteres ferromagnetisches Blech kann diese Abdeckung TE beispielsweise auch als mit Karbonfasern verstärkte Epoxidharzplatte oder als Edelstahlblech ausgeführt sein. Der Schutz des Sekundärteils vor Umwelteinflüssen wird so weiter verbessert.

Der Magnetträger T, die untere Abdeckung TE, die Abdeckung A und die Winkel W können korrespondierende Öffnungen und/oder Vorsprünge enthalten, die - ggf. zusammen mit einem Zentrierstift - für eine gegenseitige Ausrichtung der Bauteile zur Montage sorgen.

Den Figuren 2 und 3 ist noch zu entnehmen, dass der jeweils am Magnetträger T anliegende zweite Schenkel W2 der Winkel W V-förmige Einschnitte hat, so dass der Winkel W auch an gekrümmte Magnetbahnen angepasst werden kann.

Die Montage des Sekundärteils S erfolgt, indem zunächst die Abdeckung A auf einer Montagevorrichtung so platziert und fixiert wird, dass der innere Bereich der Abdeckung A zum Einsetzen der Winkel W und Magnete M zugänglich ist. Als nächstes werden die Winkel W wie oben beschrieben eingesetzt, so dass nun eine Sollposition der Magnete M definiert ist.

An den Stellen innerhalb der Abdeckung A, an denen später die Magnete M anliegen, wird etwas Kleber aufgetragen. Als nächstes werden die Magnete M in die Abdeckung A eingesetzt. Dabei wird mittels Spulen, die sich in der Montagevorrichtung befinden, ein Magnetfeld erzeugt, das die Magnete M in der Abdeckung A festhält. Sonst bestünde die Gefahr, dass beim Einsetzen weiterer Magnete M oder beim Aufsetzten des Trägers T ein bereits eingesetzter Magnet M von seinem Platz losgerissen wird. Auf die noch frei liegende Unterseite der Magnete M wird dann weiterer Kleber aufgetragen, und/oder auch auf den Magnetträger T.

Gegebenenfalls werden zur Zentrierung verwendete Stifte in die Abdeckung A oder den Träger T eingesetzt, und die Muttern B werden in die zugehörigen Montageöffnungen L des Trägers T eingelegt. Die Muttern B können dabei in die Montageöffnungen L eingeklebt werden, mittels Schrauben von der Rückseite des Trägers T her fixiert oder mit kleinen Magneten auf der Rückseite des Trägers T in den Montageöffnungen L festgehalten werden, damit sie im weiteren Verlauf der Montage nicht herausfallen.

Der Träger T wird dann wie in den Figuren 2 und 3 angedeutet auf die Abdeckung A gesetzt. Danach können die Spulen der Montagevorrichtung abgeschaltet werden, da die Magnete M jetzt sicher am Träger T fixiert sind. Zuletzt wird auf die Rückseite des Trägers T die untere Abdeckung TE aufgeklebt.

Mittels der Montagevorrichtung wird dann das Sekundärteil S zusammen gepresst, bis der Kleber ausgehärtet ist, und ein sehr kompaktes, gegen äußere Einflüsse geschütztes Sekundärteil S entstanden ist.

## Patentansprüche

1. Sekundärteil eines Linearmotors, mit auf einem Magnetträger (T) angeordneten Magneten (M), wobei der Magnetträger (T) als laminiertes Blechpaket ausgeführt ist, wobei die Bleche des Blechpakets parallel zu einer Ebene (X-Y) liegen, die senkrecht zur Magnetisierungsrichtung (Z) der Magnete (M) liegt, und **dadurch gekennzeichnet, dass** die einzelnen Bleche des Blechpakets durch Ausstanzen oder Schneiden von Löchern so geformt sind, dass der Magnetträger (T) Montageöffnungen (L) aufweist, die den Magnetträger (T) parallel zur Magnetisierungsrichtung durchstoßen, und dass in die Montageöffnungen (L) von der Seite der Magnete (M) aus Schraubenmuttern (B) als Befestigungsmittel eingelegt und verdrehsicher gehalten sind

2. Sekundärteil Anspruch 1, **dadurch gekennzeichnet, dass** eine Abdeckung (A) zusammen mit dem Magnetträger (T) die Magnete (M) umschließt und vor Umwelteinflüssen schützt, dass die Abdeckung (A) auf ihrer Innenseite angeformte erste Stege (S1) aufweist, die zwischen die Magnete (M) ragen, und dass die Abdeckung auf ihrer Innenseite angeformte zweite Stege (S2) aufweist, an die jeweils ein erster, vom Magnetträger (T) abstehender Schenkel (W1) von zwei in Längsrichtung des Sekundärteils (S) erstreckten, nichtmagnetischen Winkeln (W) angelegt ist, deren zweiter Schenkel (W2) jeweils am Magnetträger (T) befestigt ist.

3. Sekundärteil nach Anspruch 2, **dadurch gekennzeichnet, dass** der erste Schenkel (W1) jedes Winkels (W) jeweils eine Anlagefläche für die Magnete (M) bildet.

4. Sekundärteil nach Anspruch 2 oder 3, **dadurch gekennzeichnet, dass** die Abdeckung (A) aus einem Kunststoff gefertigt ist.

5. Sekundärteil nach einem der Ansprüche 2 - 4, **dadurch gekennzeichnet, dass** die Winkel (W) aus Edelstahl gefertigt sind.

6. Linearmotor mit einem Sekundärteil S nach einem der vorhergehenden Ansprüche.

## Claims

1. Secondary part of a linear motor, comprising magnets (M) arranged on a magnet carrier (T), wherein the magnet carrier (T) is in the form of a laminated laminate stack, wherein the laminates of the laminate stack are parallel to a plane (X-Y) which is perpendicular to the magnetization direction (Z) of the magnets (M), and **characterized in that** the individual laminates of the laminate stack are shaped by punching out or cutting holes such that the magnet carrier (T) has mounting openings (L) which pass through the magnet carrier (T) parallel to the magnetization direction, and **in that** screw nuts (B) as fastening means are inserted in the mounting openings (L) from the magnet (M) side and rotationally fixedly held.

2. Secondary part Claim 1, **characterized in that** a cover (A), together with the magnet carrier (T), encloses the magnets (M) and protects them against environmental influences, **in that** the inner side of the cover (A) has integrally moulded first bars (Sl), which project between the magnets (M), and **in that** the inner side of the cover has integrally moulded second bars (S2), against which a respective first leg (Wl), protruding from the magnet carrier (T), of two non-magnetic brackets (W) extending in the longitudinal direction of the secondary part (S) comes to lie, the second leg (W2) of each of the brackets being fastened to the magnet carrier (T).

3. Secondary part according to Claim 2, **characterized in that** the first leg (W1) of each bracket (W) forms a respective contact surface for the magnets (M).

4. Secondary part according to Claim 2 or 3, **characterized in that** the cover (A) is manufactured from a plastic.

5. Secondary part according to one of Claims 2-4, **characterized in that** the brackets (W) are manufactured from stainless steel.

6. Linear motor having a secondary part S according to one of the preceding claims.

## Revendications

1. Partie secondaire d'un moteur linéaire, avec des aimants (M) agencés sur un support d'aimants (T), le support d'aimants (T) étant réalisé sous forme de paquet de tôles stratifiées, les tôles du paquet de tôles étant parallèles à un plan (X-Y) qui est perpendiculaire à la direction d'aimantation (Z) des aimants (M), et **caractérisée en ce que en ce que** les tôles individuelles du paquet de tôles sont formées par estampage ou découpage de trous de telle sorte que le support d'aimants (T) présente des ouvertures de montage (L) qui traversent le support d'aimants (T) parallèlement à la direction d'aimantation, et **en ce que** des écrous (B) sont insérés dans les ouvertures de montage (L) depuis le côté des aimants (M) en tant que moyens de fixation et sont maintenus sans possibilité de rotation.

2. Partie secondaire revendication 1, **caractérisée en ce qu'**un couvercle (A) entoure les aimants (M) conjointement avec le support d'aimants (T) et les protège des influences de l'environnement, **en ce que** le couvercle (A) présente premières nervures (S1) formées sur son côté intérieur, qui dépassent entre les aimants (M), et **en ce que** le couvercle présente des deuxièmes nervures (S2) formées sur son côté intérieur, sur lesquelles est appliquée respectivement une première branche (W1), faisant saillie du support d'aimants (T), de deux équerres non magnétiques (W) s'étendant dans la direction longitudinale de la partie secondaire (S), dont la deuxième branche (W2) est fixée respectivement au support d'aimants (T).

3. Partie secondaire selon la revendication 2, **caractérisée en ce que** la première branche (W1) de chaque équerre (W) forme respectivement une surface d'appui pour les aimants (M).

4. Partie secondaire selon la revendication 2 ou 3, **caractérisée en ce que** le couvercle (A) est fabriqué en une matière plastique.

5. Partie secondaire selon l'une quelconque des revendications 2 à 4, **caractérisée en ce que** les équerres (W) sont fabriquées en acier inoxydable.

6. Moteur linéaire avec une partie secondaire S selon l'une quelconque des revendications précédentes.
